# FASCICULE DE BREVET EUROPEEN

(11) **EP 1 932 758 B1**
(45) Date de publication et mention de la délivrance du brevet: **24.03.2010**
(21) Numéro de dépôt: 07023388.7
(22) Date de dépôt: 04.12.2007
(51) Int. Cl.: B64C 1/40, F16F 15/04, F16F 1/376, F16F 1/373

(54) **Revétement absorbant**
Absorbierende Verkleidung
Absorbent coating

(30) Priorité: 11.12.2006 FR 0610783
(43) Date de publication de la demande: 18.06.2008
(73) Titulaire: EUROCOPTER, 13725 Marignane Cédex (FR)
(72) Inventeur: Manfredotti, Thomas, 06480 La Colle Sur Loup (FR)
(74) Mandataire: GPI & Associés

(56) Documents cités:
- WO-A-02/43047
- DE-C1- 4 117 740
- FR-A1- 2 870 308
- GB-A- 2 070 728
- US-A- 4 259 385
- US-A- 4 353 433

## Description

La présente invention concerne un revêtement absorbant tel que défini dans le préambule de la revendication 1, permettant de réduire, voire même supprimer, les déformations dynamiques d'une structure générées par des vibrations ou des chocs par exemple. Un tel revêtement est connu du FR-A-2 870 308.

Plus particulièrement, le revêtement absorbant selon l'Invention est préférentiellement destiné à être monté à bord d'un giravion. En étant notamment installé sur les parois de sa cabine, le revêtement absorbant atténue leurs déformations dynamiques de manière à augmenter leur durée de vie et à réduire le bruit en cabine.

Bien entendu, l'invention ne se limite pas à cette application particulière et peut être utilisée pour toutes autres applications dès l'instant où l'on souhaite réduire les déformations dynamiques d'un corps. De par sa conception, on peut éventuellement envisager d'agencer, par exemple, le revêtement absorbant sur les parois d'une machine à laver, ce type d'instrument électroménager étant soumis à de fortes vibrations.

On connaît un premier système constitué d'une plaque d'élastomère monolithique agencée sur une structure. Le pouvoir amortissant de l'élastomère amoindrit alors les déformations dynamiques de la structure, quel que soit le mode de sollicitation mécanique de cette dernière, en dissipant notamment l'énergie sous forme de chaleur.

Néanmoins, l'efficacité de ce premier système est limitée puisque, de la sorte, l'oscillation de la structure n'induit que des petits mouvements dans l'élastomère. Ainsi, la dissipation de l'énergie dans la plaque d'élastomère est faible.

Pour améliorer ce premier système, il est courant d'utiliser un deuxième système. Ce dernier comporte un élastomère visco-contraint, c'est-à-dire une plaque d'élastomère dont la partie supérieure est préalablement adhérisée sur un support métallique. La partie inférieure de la plaque d'élastomère, opposée à la partie supérieure, est alors fixée sur une structure.

Lors d'une déformation dynamique, par exemple une flexion de la structure générée par des vibrations, la face supérieure est maintenue par le support métallique. Cette condition aux limites supplémentaire induit un état de contraintes internes dans l'élastomère plus important que dans les cas précédents. Par conséquent, la dissipation de l'énergie vibratoire dans la plaque d'élastomère s'en trouve augmentée.

Le deuxième système a certes un rendement supérieur à celui du premier système. Cependant, pour des applications nécessitant une dissipation de l'énergie vibratoire importante, il s'avère encore insuffisant.

On connaît, par le document FR 2870308, un troisième système amortissant.

Le revêtement absorbant, fixé sur une structure, est pourvu d'une couche absorbante en matériau élastique qui comporte un maillage dissipateur. Ce maillage, agencé dans le matériau élastique, est constitué d'une pluralité de noeuds et d'éléments dissipateurs.

La dissipation d'énergie dans la couche absorbante est importante puisque la matière élastique de la couche absorbante est déformée, d'une part, par un effet de bras de leviers provoqué par les noeuds qui maintiennent les éléments dissipateurs éloignés de la structure et, d'autre part, par les éléments dissipateurs qui répartissent les sollicitations transmises par les noeuds dans l'ensemble de la matière élastique tout en les amplifiant par un effet géométrique.

Ce système est très efficace mais la couche absorbante représente une masse non négligeable qui peut être gênante lors d'applications particulières.

La présente invention a pour objet de proposer un revêtement absorbant relativement léger, permettant d'amortir considérablement les déformations dynamiques d'une structure.

Cet objet est réalisé par les caractéristiques telles que définies dans la revendication 1.

La réalisation industrielle du maillage dissipateur est grandement facilitée lorsque ce dernier, et par conséquent les noeuds et les éléments dissipateurs, est usiné ou moulé d'un seul tenant à partir d'un unique bloc de matière déformable, du plastique par exemple.

De même, pour faciliter le montage du revêtement absorbant sur une structure, la surface de contact de l'extrémité inférieure de chacun des noeuds, c'est-à-dire la surface en contact avec la structure, est de préférence recouverte d'un matériau auto-adhésif.

Les éléments dissipateurs sont alors éloignés de la structure en lui étant uniquement fixée par l'intermédiaire des noeuds.

Ainsi, une déformation dynamique de la structure entraîne des déplacements différentiels des noeuds. Les éléments dissipateurs sont alors sollicités ce qui a pour effet de modifier leur géométrie.

De cette manière, la dissipation d'énergie en tant que telle dans les éléments absorbants principaux est importante puisque ces derniers sont sollicités par des efforts de cisaillement conséquents.

En effet, les éléments absorbants principaux subissent les effets de la déformation de la structure d'une part, directement, au niveau de l'interface structure/élément absorbant principal, et, d'autre part de façon détournée via le mouvement des éléments dissipateurs, accentué par un effet de bras de leviers provoqué par les noeuds qui maintiennent ces éléments dissipateurs, à l'interface élément absorbant principal/élément dissipateur.

Les éléments dissipateurs amplifient donc les déformations de la structure et les transmettent aux éléments absorbants principaux. Par conséquent, ces éléments absorbants principaux sont sollicités par la structure et par les éléments dissipateurs ce qui optimise leur action.

En étant sollicités, les éléments absorbants principaux amortissent donc la déformation initialement subie par la structure, De même, les éléments dissipateurs participent activement à cette amortissement en sollicitant les éléments absorbants principaux lorsque la structure se déforme.

De façon avantageuse, les éléments dissipateurs sont rigides et font partie du groupe de matériaux comprenant les matières plastiques. Les éléments dissipateurs sont alors dimensionnés pour être utilisés dans leur domaine élastique de déformation afin de ne pas être susceptible de casser.

A contrario, les éléments absorbants principaux sont élastiques et font partie du groupe de matériaux comprenant les élastomères. Les éléments absorbants principaux possèdent une forte capacité d'absorption d'énergie, de l'énergie vibratoire par exemple, par rapport aux éléments dissipateurs. Par suite, ces éléments absorbants principaux ont un angle de perte important d'au moins 10 degrés, l'angle de perte étant bien connu de l'homme du métier et reflétant l'énergie absorbable par un matériau.

La dissipation d'énergie dans les éléments absorbants principaux est alors maximisée ce qui confère au revêtement un pouvoir amortissant non négligeable. De plus, la matière élastique permettant l'amortissement est aussi limitée au minimum ce qui allége d'autant le revêtement.

Dans cette optique, les éléments dissipateurs et les éléments absorbants principaux ont une forme identique, chaque élément dissipateur recouvrant un élément absorbant principal sur toute sa longueur.

En outre, afin d'éventuellement augmenter le pouvoir amortissant du revêtement, on amplifie les sollicitations transmises par les éléments dissipateurs aux éléments absorbants principaux par un effet géométrique. Au moins un élément dissipateur a alors avantageusement une forme d'ellipse dissipatrice, chaque ellipse étant liée à deux noeuds disposés aux intersections de sa périphérie et de son grand axe. En effet, une petite déformation d'une ellipse selon son grand axe entraîne une déformation plus importante selon son petit axe. Les efforts dissipés dans l'élément absorbant principal solidaire d'un tel élément dissipateur en forme d'ellipse sont alors maximisés.

Dans ce cas de figure, il est idéal d'obtenir un revêtement comportant une pluralité d'ellipses absorbantes, faisant office d'éléments absorbants principaux, chaque ellipse absorbante étant recouverte par une ellipse dissipatrice faisant office d'élément dissipateur. Les ellipses absorbantes et dissipatrices ont alors de préférence des formes identiques, les grand et petit axes de chaque ellipse absorbante étant recouverts des grand et petit axes d'une ellipse dissipatrice.

Selon un premier mode de réalisation, le maillage dissipateur a un motif récurrent carré à savoir un motif possédant quatre noeuds et cinq éléments dissipateurs.

Selon un second mode de réalisation, le maillage dissipateur a un motif récurrent triangulaire pourvu de trois noeuds et trois éléments dissipateurs,

Avantageusement, en référence au second mode de réalisation, le maillage dissipateur comporte une pluralité de portions triangulaire munies chacune de trois demi-ellipses reliées entre elles par trois fractions de noeuds, une demi-ellipse correspondant à un élément en forme d'ellipse coupée en deux selon son grand axe. Il suffit d'accoler plusieurs portions triangulaires afin de réaliser le maillage dissipateur. Cette construction du maillage dissipateur constitue alors une alternative efficace au moulage ou à l'usinage d'un seul tenant.

De préférence, chaque demi-ellipse d'une portion triangulaire présente une concavité du côté extérieure de la portion triangulaire.

De même, le maillage est optimisé si chaque fraction de noeud correspond à un sixième de noeuds, cette fraction de noeud décrivant un champ angulaire de 60°. Plus précisément, cette fraction correspond à un cylindre coupé selon sa hauteur afin d'être restreint à un champ angulaire de 60°.

Par ailleurs, selon une variante de ces modes de réalisation, le revêtement absorbant comporte des éléments absorbants secondaires, chaque élément absorbant secondaire étant agencé sur le dessus d'un élément dissipateur de manière à le recouvrir sur toute sa longueur. De préférence, l'élément absorbant secondaire a une forme identique à l'élément dissipateur qu'il recouvre. De plus, chaque élément absorbant secondaire est solidarisé à une face supérieure de l'élément dissipateur, cette face supérieure étant opposée à la face inférieure solidarisée à un élément absorbant principal,

L'élément absorbant secondaire, en élastomère par exemple, permet d'améliorer la dissipation d'énergie. En effet, la déformation d'un élément dissipateur, provoquée par le déplacement des noeuds associés, génère des efforts dans l'élément absorbant secondaire qui le recouvre. L'efficacité du revêtement s'en trouve donc augmentée.

Enfin, afin d'optimiser totalement le revêtement, chaque élément absorbant secondaire est visco-contraint. Par suite, le revêtement selon l'invention comporte une contreplaque rigide, les éléments absorbants secondaires étant alors agencés entre les éléments dissipateurs et cette contreplaque rigide.

L'invention et ses avantages apparaîtront avec plus de détails dans le cadre de la description, qui suit avec des exemples de réalisation donnés à titre illustratif en référence aux figures annexées qui représentent :
- la figure 1, une coupe partielle d'une structure munie d'un revêtement absorbant,
- la figure 2, une vue d'un élément dissipateur en forme d'ellipse,
- la figure 3, une vue de dessus d'un maillage dissipateur selon un premier mode de réalisation,
- la figure 4, une vue de dessus d'un maillage dissipateur selon un deuxième mode de réalisation,
- la figure 5, une vue isométrique d'un maillage dissipateur selon un deuxième mode de réalisation, et
- la figure 6, une vue éclatée schématique d'une portion d'un revêtement absorbant.

Les éléments présents dans plusieurs figures distinctes sont affectés d'une seule et même référence.

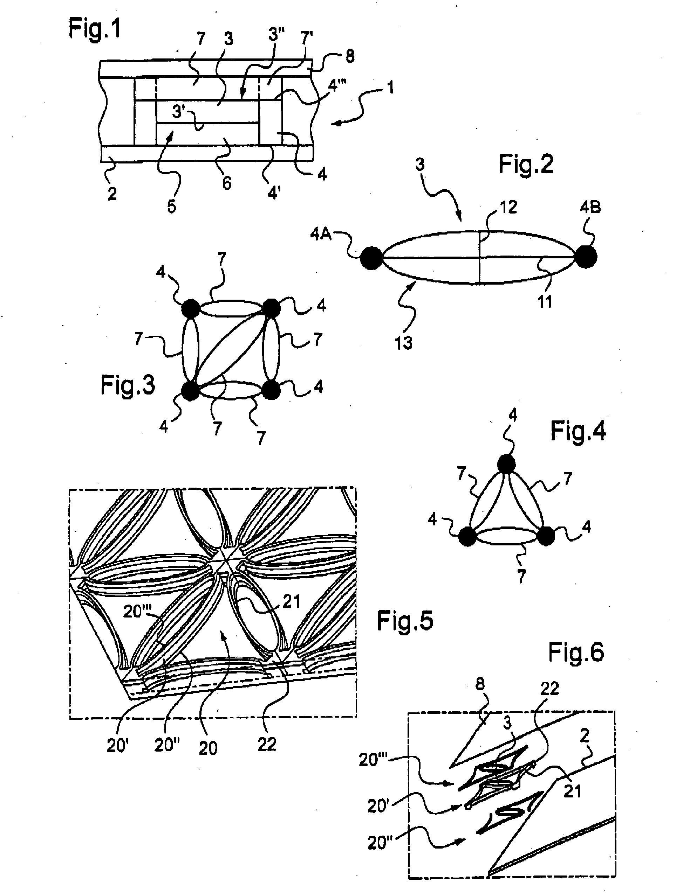

La figure 1 présente une coupe d'un revêtement absorbant 1 selon l'invention agencé sur une structure 2.

Ce revêtement absorbant 1 comporte un maillage dissipateur muni d'une pluralité d'éléments dissipateurs 3 et de noeuds 4, composés tous deux d'une matière rigide du groupe des matières plastiques par exemple.

Un élément dissipateur 3 est alors solidaire de deux noeuds 4 disposés à ses extrémités libres. De plus, les extrémités inférieures 4' des noeuds 4 sont en saillie des éléments dissipateurs et sont fixées à la structure 2. Pour faciliter le montage, les surfaces de contact de ces extrémités inférieures 4' sont recouvertes d'un matériau auto-adhésif.

Par conséquent, les éléments dissipateurs 3 sont éloignés de la structure 2, un espace libre 5 étant ainsi créé entre cette structure 2 et chaque élément dissipateur 3. Le revêtement absorbant 1 est alors pourvu d'une pluralité d'éléments absorbants principaux 6, chaque élément absorbant principal 6 étant agencé dans un espace libre 5 en étant fixé d'une part à la structure 2 et d'autre part à la face inférieure 3' d'un élément dissipateur 3.

Ces éléments absorbants principaux 6 sont élastiques et font, par exemple, partie du groupe de matériaux comprenant les élastomères. Par suite, ces éléments absorbants principaux ont un angle de perte important d'au moins 10 degrés.

Lorsque la structure 2 se déforme, suite à des vibrations par exemple, les noeuds 4 du maillage dissipateurs se déplacent, Par suite, les éléments dissipateurs 3, rigides par rapport aux éléments absorbants, se déforment. On note que le déplacement des noeuds est amplifié par un effet de bras de levier lié à leur hauteur. En effet, si la structure 2 se courbe, la distance séparant les extrémités inférieures 4' des noeuds 4 sera inférieure ou supérieure à la distance séparant leur extrémité supérieure 4" liée à un élément dissipateur 3. Ce phénomène permet ainsi d'améliorer le pouvoir amortissant du revêtement 1.

Les éléments dissipateurs 3 se déformant, chaque élément absorbant principal 6 subit alors des efforts de cisaillement sensiblement parallèles à la structure 2, dans la mesure où il est à la fois solidarisé à un élément dissipateur 3 et à la structure 2. Les éléments absorbants dissipent ainsi une partie importante de l'énergie transmise par la structure, ce qui donne un haut pouvoir amortissant au revêtement 1,

Afin de maximiser la dissipation, il est avantageux que les éléments dissipateurs 3 et les éléments absorbants principaux 6 soient de forme et de dimensions identiques, un élément dissipateur 3 recouvrant de surcroît un élément absorbant principal 6.

Selon la variante de l'invention représentée sur la figure 1, il est envisageable d'augmenter encore plus le pouvoir dissipateur du revêtement. Cela se fait au détriment de la masse mais peut s'avérer extrêmement utile suivant le besoin.

Le revêtement absorbant 1 comporte alors des éléments absorbants secondaires 7, pouvant éventuellement constituer une plaque absorbante.

Chaque élément absorbant secondaire 7, réalisé à partir d'une matière élastique lui conférant une forte capacité d'absorption d'énergie par rapport aux éléments dissipateurs en ayant un angle de perte important d'au moins 10 degrés, est alors disposé sur le dessus d'un élément dissipateur 3 de manière à le recouvrir sur toute sa surface et selon la longueur de cet élément dissipateur 3. En référence à la figure 1, chaque élément absorbant secondaire 7 est ainsi solidarisé à une face supérieure 3" d'un élément dissipateur 3, cette face supérieure 3" étant opposée et parallèle à sa face inférieure 3'.

De plus, les éléments absorbants secondaires 7 et les éléments dissipateurs 3 sont avantageusement de forme Identique et de dimensions identiques. Chaque élément absorbant secondaire 7 peut être solidarisé à un pied absorbant 7' fixé sur les extrémités supérieures 4" des noeuds 4.

Ainsi, l'ensemble élément absorbant secondaire 7 / pied 7' repose sur l'ensemble noeud 4 / élément dissipateur 3 en lui étant fixé.

Ainsi, une déformation d'un élément dissipateur 3, sous l'effet d'un mouvement de la structure 2, génère des efforts dans l'élément absorbant principal 6 associé mais aussi dans un élément absorbant secondaire 7. Le pouvoir amortissant du revêtement est donc accru.

Ce pouvoir amortissant peut être maximisé lorsque l'on visco-contraint les éléments absorbants secondaires 7. Le revêtement 1 comporte alors une contreplaque rigide 8, un élément absorbant secondaire 7 étant ainsi d'une part disposé entre un élément dissipateur 3 et la contreplaque 8, et d'autre part étant solidarisé à cet élément dissipateur 3 et cette contreplaque 8.

Par ailleurs, en référence à la figure 2, les éléments dissipateurs ont avantageusement une forme d'ellipse, mais pourraient avoir tout autre forme (barre, losange...) suivant le besoin, sans sortir du cadre de l'invention.

Un élément dissipateur 3 en forme d'ellipse est alors lié à deux noeuds 4A, 4B. Ces noeuds 4A, 4B sont disposés sur les intersections de la périphérie 13 et du grand axe 11 de l'ellipse.

D'un point de vue fonctionnel, lorsque la structure 2 est déformée sous l'effet d'une vibration, quelque soit le mode (traction, flexion...) de la sollicitation, les noeuds 4A, 4B se déplacent. Ce déplacement des noeuds 4A, 4B a pour effet de modifier la géométrie des éléments dissipateurs 3. On verra notamment ci-après qu'en se rétractant et en s'allongeant, des éléments dissipateurs 3 en forme d'ellipse induisent une déformation amplifiée de la matière élastique des éléments absorbants principaux 6 et secondaires 7.

En raison de la géométrie d'une ellipse, une faible réduction de la taille du grand axe 11 induit une augmentation importante de celle du petit axe 12, Ainsi, une faible sollicitation de l'ellipse selon le grand axe 11 est fortement amplifiée en provoquant une forte déformation du petit axe 12. Cet effet, multiplié par le nombre d'ellipses du maillage dissipateur, confère au revêtement selon l'invention un haut pouvoir amortissant.

Selon un premier mode de réalisation, en référence à la figure 3, le maillage dissipateur a un motif récurrent carré.

Ce motif carré comporte quatre noeuds 4 et quatre éléments dissipateurs 7 qui représentent respectivement les coins et les côtés d'un carré, De plus, un cinquième élément dissipateur est disposé selon une diagonale de ce carré.

Selon un deuxième mode de réalisation présenté par la figure 4, le motif récurrent du maillage dissipateur est triangulaire. Trois noeuds 4 et trois éléments dissipateurs 7 représentent alors respectivement les coins et les côtés d'un triangle.

En fonction du niveau de sollicitation de la structure, l'un ou l'autre de ces deux modes de réalisation sera privilégié.

Les figures 5 et 6 présentent respectivement des vues isométriques et éclatées d'une variante préférée du deuxième mode de réalisation.

Le maillage dissipateur a un motif récurrent triangulaire. De plus, il est bâti à partir de portions triangulaires 20 munies chacune de trois demi-ellipses 21 reliées entre elles par trois fractions de noeuds 22.

Chaque demi-ellipse 21 correspond à une ellipse coupée en deux selon son grand axe. On note, que chaque demi-ellipse 21 est concave, de manière à présenter sa concavité du côté extérieur à ladite ellipse.

Par ailleurs, les noeuds 4 sont de forme cylindrique. Ils comportent alors six fractions 22 identiques de noeuds, chaque fraction décrivant un champ angulaire de 60°.

Plus précisément, en référence à la figure 6, le revêtement comporte une première portion triangulaire 20' munie de trois demi-ellipses dites dissipatrices par commodité, chaque demi-ellipse dissipatrice constituant la moitié d'un élément dissipateur 3, reliées deux à deux par une fraction de noeud 22.

De plus, il comporte une deuxième portion triangulaire 20" pourvue de trois demi-ellipses dites absorbantes principales, chaque demi-ellipse absorbante principale constituant la moitié d'un élément absorbant principal 4. Chaque demi-ellipse absorbante principale est alors fixée à la structure 2, à une demi-ellipse dissipatrice de la première portion triangulaire 21' et à deux fractions de noeud 22.

Enfin, le revêtement comporte une troisième portion triangulaire 20"' pourvue de trois demi-ellipses dites absorbantes secondaires, chaque demi-ellipse absorbante secondaire constituant la moitié d'un élément absorbant secondaire. Chaque demi-ellipse absorbante secondaire est alors fixée à la contreplaque 8, à une demi-ellipse dissipatrice de la première portion triangulaire 20' et à deux fractions de noeud 22.

Naturellement, la présente invention est sujette à de nombreuses variations quant à sa mise en oeuvre, Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Revêtement (1) absorbant à haut pouvoir amortissant, destiné à être fixé sur une structure (2), comportant un maillage dissipateur constitué d'une pluralité d'éléments dissipateurs (3) et de noeuds (4) dont l'extrémité inférieure (4') est destiné à être fixée sur ladite structure (2),
ladite extrémité inférieure (4') desdits noeuds (4) étant en saillie desdits éléments dissipateurs (3) afin de créer après le montage du revêtement sur ladite structure un espace libre (5) entre les éléments dissipateurs (3) et ladite structure (2), **caractérisé en ce que** ledit revêtement absorbant (1) comporte des éléments absorbants principaux (6) destinés à être agencés dans ledit espace libre (5), lesdits éléments absorbants principaux (6) étant solidarisés d'une part à une face inférieure (3') desdits éléments dissipateurs (3) et solidarisés d'autre part à ladite structure (2), lesdits éléments dissipateurs (3) étant utilisés dans leur domaine de déformation élastique, lesdits éléments absorbants principaux (6) possédant une forte capacité d'absorption d'énergie par rapport aux éléments dissipateurs.

2. Revêtement selon la revendication 1,
**caractérisé en ce que** les éléments dissipateurs (3) sont rigides par rapport aux éléments absorbants et font partie du groupe de matériaux comprenant les matières plastiques.

3. Revêtement selon l'une quelconque des revendications précédentes,
**caractérisé en ce que** lesdits éléments absorbants principaux (6) sont élastiques et font partie du groupe de matériaux comprenant les élastomères.

4. Revêtement selon l'une quelconque des revendications précédentes,
**caractérisé en ce que** lesdits éléments absorbants principaux (6) ont un angle de pertes d'au moins 10 degrés.

5. Revêtement selon l'une quelconque des revendications précédentes,
**caractérisé en ce que**, lesdits éléments dissipateurs (3) et lesdits éléments absorbants principaux (6) ont une forme identique, chaque élément dissipateur (3) recouvrant un élément absorbant principal (6) sur toute sa longueur.

6. Revêtement selon l'une quelconque des revendications précédentes,
**caractérisé en ce que** la surface de contact de ladite extrémité inférieure (4') est recouverte d'un matériau auto-adhésif.

7. Revêtement selon l'une quelconque des revendications précédentes,
**caractérisé en ce que** ledit maillage dissipateur a un motif récurrent carré.

8. Revêtement selon l'une quelconque des revendications 1 à 6,
**caractérisé en ce que** ledit maillage dissipateur a un motif récurrent triangulaire.

9. Revêtement selon l'une quelconque des revendications précédentes,
**caractérisé en ce qu'**au moins un élément dissipateur (3) est une ellipse.

10. Revêtement selon la revendication 9,
**caractérisé en ce que** ladite ellipse est solidarisée à deux noeuds (4, 4A, 4B) disposés aux intersections de sa périphérie (13) et de son grand axe (11).

11. Revêtement selon l'une quelconque des revendications 9 à 10,
**caractérisé en ce que**, ledit maillage dissipateur ayant un motif récurrent triangulaire, le maillage dissipateur comporte des portions triangulaires (20, 20', 20", 20"') munies chacune de trois demi-ellipses (21) reliées entre elles par trois fractions de noeuds (22), une demi-ellipse (21) correspondant à une ellipse coupée en deux selon son grand axe.

12. Revêtement selon la revendication 11,
**caractérisé en ce que** chaque demi-ellipse (21) d'une portion triangulaire (20, 20', 20", 20"') présente une concavité du côté extérieur à ladite portion triangulaire (20, 20', 20", 20"').

13. Revêtement selon l'une quelconque des revendications 11 à 12,
**caractérisé en ce que** chaque fraction de noeud (22) correspond à un sixième de noeuds, ladite fraction (22) décrivant un champ angulaire de 60°.

14. Revêtement selon l'une quelconque des revendications précédentes,
**caractérisé en ce qu'**il comporte des éléments absorbants secondaires (7), chaque élément absorbant secondaire (7) étant agencé sur le dessus d'un élément dissipateur (3) de manière à le recouvrir sur toute sa longueur.

15. Revêtement selon la revendication 14,
**caractérisé en ce que** chaque élément absorbant secondaire (7) est solidarisée à une face supérieure (3") d'un élément dissipateur (3), ladite face supérieure (3") étant opposée à ladite face inférieure (3') solidarisée à un élément absorbant principal (6).

16. Revêtement selon l'une quelconque des revendications 14 à 15,
**caractérisé en ce que** chaque élément absorbant secondaire (7) est réalisé à partir d'une matière élastique lui conférant une forte capacité d'absorption d'énergie par rapport aux éléments dissipateurs en ayant un angle de perte important d'au moins 10 degrés.

17. Revêtement selon l'une quelconque des revendications 14 à 16,
**caractérisé en ce qu'**il comporte une contreplaque rigide (8), lesdits éléments absorbants secondaires (7) étant alors agencée entre lesdits éléments dissipateurs (3) et ladite contreplaque rigide (8).

18. Revêtement selon l'une quelconque des revendications précédentes,
**caractérisé en ce que** ledit maillage dissipateur est usiné d'un seul tenant à partir d'un unique bloc de matière déformable.

19. Revêtement selon l'une quelconque des revendications précédentes,
**caractérisé en ce que** ledit maillage dissipateur est obtenu par moulage d'un bloc de matière déformable en un seul tenant.

## Claims

1. An absorbent covering (1) of high dampening power, intended to be fixed to a structure (2), comprising a dissipating meshwork formed of a plurality of dissipating elements (3) and nodes (4), the lower end (4') of which is intended to be fixed to said structure (2),
said lower end (4') of said nodes (4) protruding from said dissipating elements (3) in order to create, once the covering has been mounted on said structure, a free space (5) between the dissipating elements (3) and said structure (2), **characterised in that** said absorbent covering (1) comprises main absorbent elements (6) intended to be arranged in said free space (5), said main absorbent elements (6) being made integral on one hand with a lower face (3') of said dissipating elements (3) and intended to be made integral on the other hand with said structure (2), said dissipating elements (3) being used within their elastic range, said main absorbent elements (6) having a high energy absorption capacity compared with the dissipating elements.

2. A covering according to Claim 1,
**characterised in that** the dissipating elements (3) are rigid compared with the absorbent elements and form part of the group of materials comprising plastics materials.

3. A covering according to any one of the preceding claims,
**characterised in that** said main absorbent elements (6) are elastic and form part of the group of materials comprising elastomers.

4. A covering according to any one of the preceding claims,
**characterised in that** said main absorbent elements (6) have a loss angle of at least 10 degrees.

5. A covering according to any one of the preceding claims,
**characterised in that** said dissipating elements (3) and said main absorbent elements (6) have an identical shape, each dissipating element (3) covering a main absorbent element (6) over its entire length.

6. A covering according to any one of the preceding claims,
**characterised in that** the contact surface of said lower end (4') is covered with a self-adhesive material.

7. A covering according to any one of the preceding claims,
**characterised in that** said dissipating meshwork has a square recurring pattern.

8. A covering according to any one of Claims 1 to 6,
**characterised in that** said dissipating meshwork has a triangular recurring pattern.

9. A covering according to any one of the preceding claims,
**characterised in that** at least one dissipating element (3) is an ellipse.

10. A covering according to Claim 9,
**characterised in that** said ellipse is made integral with two nodes (4, 4A, 4B) arranged at the intersections of its periphery (13) and its major axis (11).

11. A covering according to any one of Claims 9 to 10,
**characterised in that,** said dissipating meshwork having a triangular recurring pattern, the dissipating meshwork comprises triangular portions (20, 20', 20", 20"') each provided with three semi-ellipses (21) which are interconnected by three fractions (22) of nodes, a semi-ellipse (21) corresponding to an ellipse cut into two along its major axis.

12. A covering according to Claim 11,
**characterised in that** each semi-ellipse (21) of a triangular portion (20, 20', 20", 20"') has a concavity on the side external to said triangular portion (20, 20', 20", 20"').

13. A covering according to any one of Claims 11 to 12,
**characterised in that** each node fraction (22) corresponds to one sixth of nodes, said fraction (22) describing an angular field of 60°.

14. A covering according to any one of the preceding claims,
**characterised in that** it comprises secondary absorbent elements (7), each secondary absorbent element (7) being arranged on the top of a dissipating element (3) so as to cover it over its entire length.

15. A covering according to Claim 14,
**characterised in that** each secondary absorbent element (7) is made integral with an upper face (3 ") of a dissipating element (3), said upper face (3") being opposed to said lower face (3') which is made integral with a main absorbent element (6).

16. A covering according to any one of Claims 14 to 15,
**characterised in that** each secondary absorbent element (7) is produced from an elastic material which imparts thereto a high energy absorption capacity compared with the dissipating elements, having a large loss angle of at least 10 degrees.

17. A covering according to any one of Claims 14 to 16,
**characterised in that** it comprises a rigid counterplate (8), said secondary absorbent elements (7) then being arranged between said dissipating elements (3) and said rigid counterplate (8).

18. A covering according to any one of the preceding claims,
**characterised in that** said dissipating meshwork is machined all in one piece from a single block of deformable material.

19. A covering according to any one of the preceding claims,
**characterised in that** said dissipating meshwork is obtained by moulding a block of deformable material all in one piece.

## Patentansprüche

1. Absorbierende Verkleidung (1) mit hoher Stoßdämmfähigkeit, zur Befestigung auf einer Struktur (2) mit einem Zerteilernetzwerk bestehend aus einer Mehrzahl von zerteilenden Elementen (3) und Knoten (4), deren unteres Ende (4') dazu bestimmt ist, auf der Struktur (2) befestigt zu werden, wobei das untere Ende (4') der Knoten (4) gegenüber den Zerteilerelementen (3) vorsteht, um nach der Montage der Verkleidung auf der Struktur einen freien Raum (5) zwischen den Zerteilerelementen (3) und der Struktur (2) zu bilden,
**dadurch gekennzeichnet, dass** die absorbierende Verkleidung (1) Hauptabsorptionselemente (6) aufweist, die dazu bestimmt sind, in dem Freiraum (5) angeordnet zu werden, wobei die Hauptabsorptionselemente (6) einerseits an einer unteren Fläche (3') der Zerteilerelemente (3) befestigt sind und andererseits dazu bestimmt sind, an der Struktur (2) befestigt zu werden, wobei die Zerteilerelemente (3) in ihrem Bereich der elastischen Deformation eingesetzt werden, und die Hauptabsorptionselemente (6) im Verhältnis zu den Zerteilerelementen eine große Energieabsorptionskapazität aufweisen.

2. Verkleidung nach Anspruch 1,
**dadurch gekennzeichnet, dass** die Zerteilerelemente (3) relativ zu den Absorptionselementen steif sind und zu der Materialgruppe gehören, die Kunststoffe beinhaltet.

3. Verkleidung nach einem der vorstehenden Ansprüche,
**dadurch gekennzeichnet, dass** die Hauptabsorptionselemente (6) elastisch sind und aus der Materialgruppe stammen, die die Elastomere umfasst.

4. Verkleidung nach einem der vorstehenden Ansprüche,
**dadurch gekennzeichnet, dass** die Hauptabsorptionselemente (6) einen Verlustwinkel von mindestens 10 Grad aufweisen.

5. Verkleidung nach einem der vorstehenden Ansprüche,
**dadurch gekennzeichnet, dass** die Zerteilerelemente (3) und die Hauptabsorptionselemente (6) eine identische Form aufweisen, wobei jedes Zerteilerelement (3) ein Hauptabsorptionselement (6) auf seiner gesamten Länge abdeckt.

6. Verkleidung nach einem der vorstehenden Ansprüche,
**dadurch gekennzeichnet, dass** die Kontaktfläche des unteren Endes (4') mit einem selbstklebenden Material bedeckt ist.

7. Verkleidung nach einem der vorstehenden Ansprüche,
**dadurch gekennzeichnet, dass** das Zerteilernetzwerk das Muster sich wiederholender Quadrate aufweist.

8. Verkleidung nach einem der Ansprüche 1 bis 6,
**dadurch gekennzeichnet, dass** das Zerteilernetzwerk das Muster sich wiederholender Dreiecke aufweist.

9. Verkleidung nach einem der vorstehenden Ansprüche,
**dadurch gekennzeichnet, dass** mindestens ein Zerteilerelement (3) eine Ellipse ist.

10. Verkleidung nach Anspruch 9,
**dadurch gekennzeichnet, dass** die Ellipse an zwei Knoten (4, 4A, 4B) befestigt ist, die an den Schnittstellen ihres Umfangs (13) mit ihren großen Achsen (11) angeordnet sind.

11. Verkleidung nach einem der Ansprüche 9 oder 10,
**dadurch gekennzeichnet, dass** das Zerteilernetzwerk ein Motiv sich wiederholender Dreiecke aufweist und dreieckige Bereiche (20, 20', 20", 20"'), die jeweils mit drei Halbellipsen (21) versehen sind, die untereinander über drei Knotenteile (22) verbunden sind, wobei eine Halbellipse (21) einer entlang ihrer großen Achse in zwei Teile geschnittenen Ellipse entspricht.

12. Verkleidung nach Anspruch 11,
**dadurch gekennzeichnet, dass** jeder Halbellipse (21) eines dreieckigen Bereichs (20, 20', 20", 20"') eine Konkavität bezüglich der Außenseite des dreieckigen Bereichs (20, 20', 20", 20"') aufweist.

13. Verkleidung nach einem der Ansprüche 11 oder 12,
**dadurch gekennzeichnet, dass** jeder Knotenteil (22) einem Sechstel des Knotens entspricht, wobei der Teil (22) einen Winkel von 60° umschreibt.

14. Verkleidung nach einem der vorstehenden Ansprüche,
**dadurch gekennzeichnet, dass** er sekundäre absorbierende Elemente (7) aufweist, die jeweils auf dem Zerteilerelement (3) derart angeordnet sind, dass sie dessen gesamte Länge abdecken.

15. Verkleidung nach Anspruch 14,
**dadurch gekennzeichnet, dass** jedes sekundäre Absorberelement (7) an einer oberen Fläche (3") eines Zerteilerelements (3) befestigt ist, wobei die obere Fläche (3") gegenüber der unteren Fläche (3') angeordnet ist und mit einem Hauptabsorptionselement (6) fest verbunden ist.

16. Verkleidung nach einem der Ansprüche 14 oder 15,
**dadurch gekennzeichnet, dass** jedes sekundäre Absorptionselement (7) aus einem elastischen Material hergestellt ist, welches ihm eine hohe Energieabsorptionskapazität im Verhältnis zu den Zerteilerelementen gibt und einen großen Verlustwinkel von mindestens 10 Grad aufweist.

17. Verkleidung nach einem der Ansprüche 14 bis 16, **gekennzeichnet durch** eine starre Konterplatte (8), wobei die Sekundärabsorptionselemente (7) zwischen den Zerteilerelementen (3) und der steifen Konterplatte (8) angeordnet sind.

18. Verkleidung nach einem der vorstehenden Ansprüche,
**dadurch gekennzeichnet, dass** das Zerteilernetzwerk aus einem Stück ausgehend von einem einzigen Block aus verformbaren Material gearbeitet ist.

19. Verkleidung nach einem der vorstehenden Ansprüche,
**dadurch gekennzeichnet, dass** das Zerteilernetzwerk in einem Stück durch Gießen eines Blocks aus verformbaren Material hergestellt ist.
